# EUROPÄISCHE PATENTSCHRIFT

(11) **EP 3 566 892 B1**
(45) Veröffentlichungstag und Bekanntmachung des Hinweises auf die Patenterteilung: **22.09.2021**
(21) Anmeldenummer: 19165613.1
(22) Anmeldetag: 27.03.2019
(51) Int. Cl.: B60K 28/16, F02D 31/00, F02D 41/02

(54) **VERFAHREN ZUR STEUERUNG EINES ANTRIEBSMOTORS IN EINEM KRAFTFAHRZEUG**
METHOD FOR CONTROLLING A DRIVE MOTOR IN A MOTOR VEHICLE
PROCÉDÉ DE COMMANDE D'UN MOTEUR D'ENTRAÎNEMENT DANS UN VÉHICULE AUTOMOBILE

(30) Priorität: 07.05.2018 DE 102018207079
(43) Veröffentlichungstag der Anmeldung: 13.11.2019
(73) Patentinhaber: Audi AG, 85045 Ingolstadt (DE)
(72) Erfinder: Burow, Clemens, 80339 München (DE); Bader, Jürgen, 80803 München (DE); Reiff, Moritz, 85354 Freising (DE); Kis, Raphael, 85057 Ingolstadt (DE); Pint, Siegfried, 85139 Wettstetten (DE)

(56) Entgegenhaltungen:
- DE-A1-102015 222 059
- JP-B2- 2 898 439
- US-A1- 2002 056 581
- US-A1- 2006 241 843

## Beschreibung

Die Erfindung betrifft ein Verfahren zur Steuerung eines Antriebsmotors in einem Kraftfahrzeug.

Sogenannte Motor-Schleppmoment-Regelungen werden in Kraftfahrzeugen genutzt, um ein Blockieren beziehungsweise einen starken Schlupf von Rädern zu verhindern, wenn das Kraftfahrzeug durch ein Schleppmoment des Motors abgebremst wird. Hierbei werden, beispielsweise durch ein Steuergerät einer elektronischen Spurkontrolle, aktuelle Traktionsinformationen für die einzelnen Räder gewonnen und es wird ein optimaler Radschlupf beziehungsweise eine sinnvolle Drehzahl für die einzelnen Räder des Kraftfahrzeugs bestimmt. Unterschreitet die aktuelle Drehzahl des jeweiligen Rades diesen Grenzwert, so wird ein Antriebsmoment soweit angehoben, dass die gewünschte Raddrehzahl nicht unterschritten wird. Da häufig ein radindividueller Antrieb nicht möglich ist, erfolgt eine Regelung häufig für das aktuell kritischste Rad der angetriebenen Achse bzw. bei Allrad-Fahrzeugen des Fahrzeugs.

Eine Momentvorgabe einer solchen Motor-Schleppmoment-Regelung, die ein Blockieren bzw. ein starkes Schlupfen der Räder aufgrund von Schleppmomenten verhindern soll, kann über einen Momentkoordinator mit anderen Momentvorgaben, beispielsweise mit Momentvorgaben eines Abwürgeschutzreglers oder eines Leerlaufreglers und mit Momentvorgaben aufgrund von Fahrpedalbetätigungen des Fahrers kombiniert werden. Dies ist beispielsweise aus der Druckschrift EP 1 272 752 B1 bekannt.

Die JP 2 898439 B2 offenbart eine Regelung einer Minimaldrehzahl einer Brennkraftmaschine basierend auf einer gemessenen Radgeschwindigkeit und der Motordrehzahl.

Die DE 10 2015 222059 A1 offenbart ein Fahrdynamikregelsystem, dessen Fahrdynamiksteuereinheit mit einer Antriebssteuereinheit verbunden und ausgebildet ist, aus einem Soll-Schlupf-Korridor eine Soll-Drehzahl oder einen Soll-Drehzahl-Korridor an die Antriebssteuereinheit auszugeben.

Aus dem in der EP 1 272 752 B1 beschriebenen Vorgehen resultiert eine relativ komplexe und lange Regelschleife, da beispielsweise zumindest zwei Steuergeräte, nämlich das Steuergerät der elektronischen Spurkontrolle und ein Motorsteuergerät, an der Regelung beteiligt sind. Da Steuergeräte für eine elektronische Spurkontrolle typischerweise mit einer Vielzahl von Fahrzeugsystemen kommunizieren müssen, beispielsweise mit dem Bremssystem, dem Antriebssystem, einer eventuell vorhandenen Lenkaktorik, usw., sind die maximal erreichbaren Taktungen einer entsprechenden Regelung oder Steuerung stark beschränkt. Da die Länge der Regelstrecke zudem die Phasenreserve der Regelung reduziert, sollte eine entsprechende Regelung relativ stark bedämpft werden, um Instabilitäten zu vermeiden.

Diese Faktoren können gemeinsam dazu führen, dass die Regelung nicht in allen Betriebssituationen schnell genug ist, um einen aus einem Schleppmoment resultierenden Schlupf zu begrenzen. Dies führt zu einem zu hohen Bremsschlupf, der aufgrund der Form der Kraftschluss-Schlupfkurve zwischen Rad und Fahrbahn typischerweise stark reduziert werden muss, um wieder ein stabiles Fahrverhalten herzustellen. Unter Umständen muss das Rad sogar angetrieben werden, um den Bremsschlupf wieder abzubauen. Insgesamt kann somit in einigen Fällen zumindest kurzfristig eine mangelnde Spurstabilität bzw. Lenkfähigkeit resultieren bzw. eine Geschwindigkeitsreduzierung kann langsamer erfolgen, als ideal gewünscht.

Der Erfindung liegt somit die Aufgabe zu Grunde, ein dem gegenüber verbessertes Verfahren zur Steuerung eines Antriebsmotors anzugeben.

Die Aufgabe wird erfindungsgemäß durch ein Verfahren der eingangs genannten Art gelöst, das die folgenden Schritte umfasst:
- Ermitteln einer Fahrsituationsinformation, die eine Haftreibung und/oder einen Kraftschluss wenigstens eines Rades des Kraftfahrzeugs und/oder eine Geschwindigkeit des Kraftfahrzeugs beschreibt,
- Ermitteln einer Minimaldrehzahl des Antriebsmotors in Abhängigkeit der Fahrsituationsinformation, und
- Regeln oder Steuern der Drehzahl des Antriebsmotors in Abhängigkeit der Minimaldrehzahl, insbesondere derart, dass die Drehzahl stets größer ist als die Minimaldrehzahl.

Die genannten Schritte können insbesondere dazu genutzt werden, eine Motor-Schleppmoment-Regelung zu implementieren bzw. durch die beschriebenen Verfahrensschritte zu ersetzen. Hierbei wurde erkannt, dass eine genutzte Regelstrecke dadurch verkürzt werden kann, indem statt der Raddrehzahl unmittelbar die Drehzahl des Antriebsmotors geregelt bzw. gesteuert wird. Wird die Wirkung eines Antriebsdifferenzials zunächst vernachlässigt, so gibt die Drehzahl des Antriebsmotors unmittelbar die Drehzahl der angetriebenen Räder vor, so dass hierüber im Ergebnis auch ein Raddrehzahlminimum für die einzelnen Räder vorgegeben wird. Gegenüber einer Regelung der einzelnen Raddrehzahlen werden allerdings mehrere Vorteile erreicht.

Einerseits ist die Änderung der Minimaldrehzahl durch die real mögliche maximale Fahrzeugverzögerung begrenzt. Somit ist sie weniger dynamisch als die im Rahmen bisheriger Motor-Schleppmoment-Regelungen ermittelten Momentvorgaben zur Regelung der einzelnen Raddrehzahlen. Kommunikationsstrecken im Fahrzeug können somit entlastet werden.

Zudem wird unmittelbar die Drehzahl des Motors gesteuert beziehungsweise geregelt, statt eine längere Regelstrecke vorzusehen. Dies ermöglicht es insbesondere, die Regelung selbst auf einem Steuergerät des Antriebsmotors zu implementieren, womit eine erheblich kürzere Regelstrecke erreicht und die Taktrate des Reglers deutlich erhöht werden kann. Somit ist weniger Phasenreserve erforderlich, womit die Regelung selbst schneller erfolgen kann, das heißt mit einer geringeren Bedämpfung. Dies führt dazu, dass ein gewünschter Schlupf genau eingeregelt werden kann, womit höhere Verzögerungen und somit kürzere Bremswege erreicht werden können, wobei gleichzeitig die Spurstabilität und die Lenkfähigkeit verbessert werden. Außerdem kann durch die vereinfachte Regelung die Komplexität der Reglerapplikation reduziert werden und es muss weniger Funktionalität über ein separates Steuergerät bereitgestellt werden, wodurch insgesamt eine Kostenersparnis erreicht werden kann.

Die Minimaldrehzahl kann quasi - kontinuierlich oder zumindest wiederholt ermittelt werden. Die Fahrsituationsinformation kann beispielsweise eine prädizierte bzw. abgeschätzte Kraftschluss-Schlupfkurve beschreiben. Solche Kraftschluss-Schlupfkurven beschreiben den Zusammenhang zwischen einem Schlupf eines Rades und einem effektiven Reibwert bzw. einer effektiven Verzögerung in der Längsrichtung des Kraftfahrzeugs. Um überhaupt eine Geschwindigkeitsreduzierung zu erreichen, muss ein gewisser Schlupf vorliegen. Die Kraftschluss-Schlupfkurve steigt zunächst mit steigendem Schlupf näherungsweise linear an, bis eine maximale Verzögerung bzw. eine maximale effektive Reibung erreicht wird. Bei noch höherem Schlupf sinkt die erreichte Verzögerung bzw. effektive Haftreibungskraft erneut, womit ein instabiles Fahrverhalten resultiert, da mit zunehmendem Schlupf die Haftung zwischen Rädern und Straße sinkt und das Fahrzeug somit noch stärker schlupft. Ergänzend oder alternativ kann als Fahrsituationsinformation ein Haftreibungswert, also insbesondere das Maximum einer solchen Kraftschluss-Schlupfkurve, ermittelt werden.

Eine Abschätzung von aktuellen Kraftschluss-Schlupfkurven bzw. maximalen Haftreibungswerten für eine Fahrsituationen ist prinzipiell aus dem Bereich der elektronischen Spurkontrollsysteme bekannt und soll daher nicht im Detail erläutert werden. Prinzipiell können beispielsweise mehrere diskrete Kraftschluss-Schlupfkurven vorgegeben werden. Beispielsweise in Abhängigkeit einer Erkennung eines Straßenbelags, beispielsweise mit Hilfe von Daten eines Navigationsgeräts und/oder einer Kamera, des Wetters, das beispielsweise mit Hilfe eines Regensensors, durch Daten einer externen Datenquelle und/oder ebenfalls mit Hilfe einer Kamera ermittelt werden kann, und/oder anderen Vorwissens, beispielsweise durch in einem Fahrzeugsystem gespeicherte Reifendaten, kann eine dieser Kraftschluss-Schlupfkurven ausgewählt werden.

Es ist jedoch auch möglich, die Fahrsituationsinformation, insbesondere die Kraftschluss-Schlupfkurve, im Fahrbetrieb zu ermitteln und/oder anzupassen. Ein Radschlupf kann beispielsweise durch Überwachung der Raddrehzahlen angetriebener und nicht angetriebener Achsen ermittelt werden. An die einzelnen Räder übertragene Antriebs- und Bremsmomente können ebenfalls bekannt sein, so dass für die einzelnen Räder eine Kraftschluss-Schlupfkurve im Rahmen des Fahrbetriebs zumindest abschnittsweise erfasst beziehungsweise aktualisiert werden kann.

Der Antriebsmotor kann in Abhängigkeit eines vorgegebenen Sollmoments gesteuert oder geregelt werden, wenn die Drehzahl die Minimaldrehzahl oder einen anderen Drehzahlgrenzwert, der größer als die Minimaldrehzahl ist, überschreitet. Insbesondere kann im erfindungsgemäßen Verfahren vorgesehen sein, dass ein Umschalten oder Überblenden zwischen einer momentabhängigen Steuerung oder Regelung bei ausreichend großen Drehzahlen und einer minimaldrehzahlabhängigen Steuerung oder Regelung bei kleinen Drehzahlen erfolgt. Der Drehzahlgrenzwert kann in Abhängigkeit der Minimaldrehzahl ermittelt werden, beispielsweise durch Multiplikation der Minimaldrehzahl mit einem vorgegebenen oder minimaldrehzahlabhängigen Faktor.

Das vorgegebene Sollmoment kann durch eine Steuereinrichtung des Kraftfahrzeugs vorgegeben werden, die insbesondere Momentanforderungen mehrerer Quellen aggregieren kann und in Abhängigkeit der einzelnen Momentanforderungen eine Gesamtanforderung ausgibt. Das Sollmoment kann beispielsweise von einer fahrerseitig oder durch ein längsführendes Fahrerassistenzsystem vorgegebenen Fahrmomentvorgabe abhängen. Zusätzlich kann das vorgegebene Sollmoment jedoch beispielsweise durch ein Steuergerät zur elektronischen Spurkontrolle, eine Leerlaufdrehzahlregelung, einen Abwürgschutz oder Ähnliches beeinflusst werden.

Die Steuerung oder Regelung des Antriebsmotors in Abhängigkeit des vorgegebenen Sollmoments kann somit im Wesentlichen der eingangs erläuterten, aus dem Stand der Technik bekannten Steuerung beziehungsweise Regelung des Antriebsmotors entsprechen. Im Unterschied zu dieser wird jedoch die Einhaltung der Minimaldrehzahl garantiert, das heißt, insbesondere wird unabhängig von dem vorgegebenen Sollmoment verhindert, dass die Drehzahl des Antriebsmotors unter die aktuelle Minimaldrehzahl fällt, um insbesondere ein Schlupfen oder ein Blockieren einzelner Räder zu verhindern.

Für das Rad oder wenigstens eines der Räder des Kraftfahrzeugs wird ein von der Fahrsituationsinformation abhängiges Raddrehzahlminimum ermittelt, wobei die Minimaldrehzahl für den Antriebsmotor in Abhängigkeit des Raddrehzahlminimums ermittelt wird. Wie bereits eingangs erwähnt, kann hierbei zunächst die Auswirkung eines Differentials zwischen verschiedenen Rädern vernachlässigt werden, so dass durch das Getriebe beziehungsweise den Antriebsstrang des Kraftfahrzeugs ein definiertes Übersetzungsverhältnis zwischen der Drehzahl des Rades und der Drehzahl des Antriebsmotors vorgegeben ist, so dass aus dem Raddrehzahlminimum unmittelbar die Minimaldrehzahl für den Antriebsmotor berechnet werden kann. Da das Raddrehzahlminimum, wie im Folgenden noch genauer erläutert werden wird, so gewählt werden soll, dass kein allzu hoher Schlupf auftritt, kann, zumindest bei einer Geradeausfahrt, von gleichen Raddrehzahlen der Räder einer Achse ausgegangen werden, so dass ein vorhandenes Differential vernachlässigt werden kann. Es ist jedoch auch möglich, beispielsweise bei Kurvenfahrten, prognostizierte Drehzahlunterschiede der Räder einer angetriebenen Achse aufgrund eines Differentials zu berücksichtigen, so dass unterschiedliche virtuelle Übersetzungen für die verschiedenen Räder einer angetriebenen Achse resultieren können.

Im erfindungsgemäßen Verfahren können mehrere Räder des Kraftfahrzeugs berücksichtigt werden. Hierbei kann ein jeweiliges Raddrehzahlminimum für mehrere Räder des Kraftfahrzeugs ermittelt werden, wobei die Minimaldrehzahl in Abhängigkeit des größten Raddrehzahlminimums ermittelt wird oder das Raddrehzahlminimum kann für das Rad mit dem größten aktuellen Schlupf ermittelt und zur Berechnung der Minimaldrehzahl verwendet werden. Mit anderen Worten kann jenes Rad der angetriebenen Achse beziehungsweise des Kraftfahrzeugs zur Ermittlung der Minimaldrehzahl berücksichtigt werden, das am kritischsten ist, also für das ein maximales Risiko besteht, dass es in einen nicht stabilen Betriebsbereich eindringt, in dem es blockiert oder sehr stark schlupft.

Das Raddrehzahlminimum wird derart ermittelt, dass der Schlupf des oder des jeweiligen Rades bei der Geschwindigkeit des Kraftfahrzeugs kleiner ist als jener Schlupf, bei dem ein maximaler Kraftschluss zwischen dem Rad und dem Untergrund erreicht wird. Die Fahrsituationsinformation kann, wie bereits erläutert, eine Kraftschluss-Schlupfkurve vorgeben oder zumindest eine Abschätzung der Position des Maximums der Kraftschluss-Schlupfkurve ermöglichen. Ist der Schlupf für ein Rad geringer als dieses Maximum, so führt eine weitere Erhöhung des Schlupfes zu einem höheren effektiven Haftreibungswert beziehungsweise Kraftschluss und somit zu einem stärken Bremsen. Ein Schlupf jenseits des Maximums führt jedoch typischerweise dazu, dass die effektive Haftreibung mit steigendem Schlupf weiter fällt, so dass eine Bremswirkung weiter fällt und die Spurstabilität sinkt.

Aus der Geschwindigkeit des Kraftfahrzeugs kann bei bekannter Radgeometrie zu einer bestimmten Raddrehzahl unmittelbar der resultierende Schlupf berechnet werden. Somit kann im erfindungsgemäßen Verfahren ein optimaler Schlupf, der kleiner ist als jener Schlupf, bei dem ein maximaler Kraftschluss erreicht wird, gewählt werden und es kann eine Raddrehzahl berechnet werden, die bei der aktuellen Geschwindigkeit des Kraftfahrzeugs aus diesem Schlupf resultiert. Diese kann dem Raddrehzahlminimum entsprechen.

Neben dem erfindungsgemäßen Verfahren betrifft die Erfindung ein Kraftfahrzeug, das zur Durchführung des erfindungsgemäßen Verfahrens eingerichtet ist. Das Kraftfahrzeug kann eine Steuereinrichtung aufweisen, durch die in zumindest einem Betriebsmodus des Kraftfahrzeugs das erfindungsgemäße Verfahren durchgeführt wird.

Das Kraftfahrzeug kann eine erste Steuereinrichtung umfassen, die zur Ermittlung der Minimaldrehzahl für den Antriebsmotor und zur Übermittlung der Minimaldrehzahl an eine dem Antriebsmotor zugeordnete, zweite Steuereinrichtung eingerichtet ist, wobei die zweite Steuereinrichtung dazu eingerichtet ist, den Antriebsmotor in Abhängigkeit der Minimaldrehzahl zu steuern oder zu regeln. In zumindest einem Betriebsmodus des Kraftfahrzeugs wird die Minimaldrehzahl somit durch die erste Steuereinrichtung ermittelt und an die zweite Steuereinrichtung übermittelt, wonach die zweite Steuereinrichtung den Antriebsmotor in Abhängigkeit der Minimaldrehzahl steuert oder regelt. Durch eine derartigen Aufbau des Kraftfahrzeugs kann, wie eingangs bereits erläutert, eine sehr kurze Regelschleife realisiert werden, die eine sehr schnelle Regelung der Drehzahl des Antriebsmotors ermöglicht, wodurch insgesamt das Fahrverhalten des Kraftfahrzeugs gegenüber einer üblichen Motor-Schleppmoment-Regelung deutlich verbessert werden kann.

Weitere Vorteile und Einzelheiten der Erfindung ergeben sich aus den folgenden Ausführungsbeispielen sowie den zugehörigen Zeichnungen. Hierbei zeigen:
- Fig. 1: ein in Ausführungsbeispiel eines erfindungsgemäßen Kraftfahrzeugs, durch das ein Ausführungsbeispiel des erfindungsgemäßen Verfahrens durchführbar ist, und
- Fig. 2: beispielhaft drei Kraftschluss-Schlupfkurven für verschiedene Fahrsituationen.

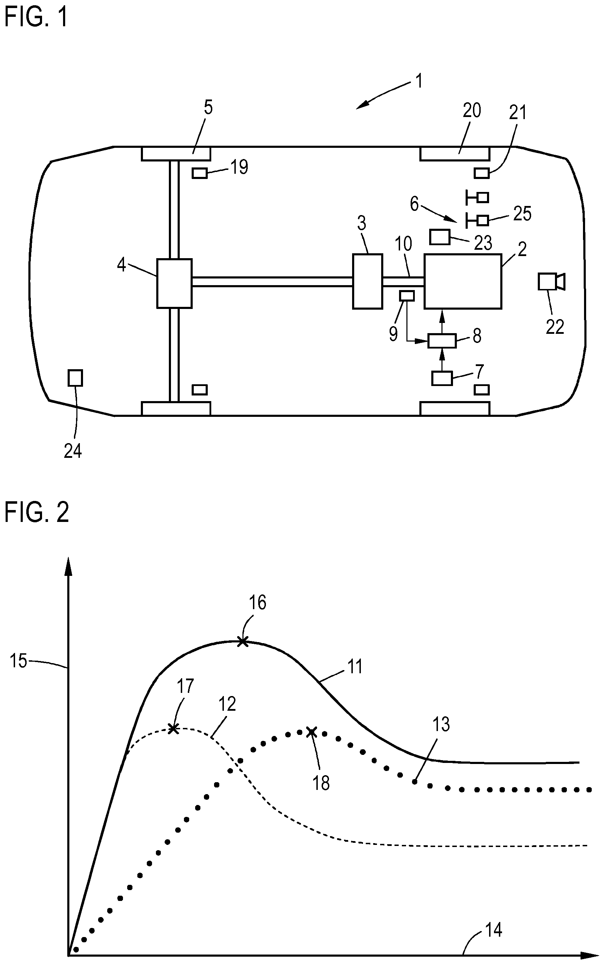

Fig. 1 zeigt ein Kraftfahrzeug 1 mit einem Antriebsmotor 2, der über ein Getriebe 3 und ein Differential 4 die Räder 5 der Hinterachse des Kraftfahrzeugs 1 antreibt. Insbesondere wenn der Antriebsmotor 2 ein Verbrennungsmotor ist, können, beispielsweise wenn ein Fahrer das Fahrpedal 6 plötzlich loslässt, Schleppmomente auftreten, die die Räder 5 bremsen. Hierbei können die Räder 5 bei einem zu starken Abbremsen blockieren oder stark schlupfen, wodurch einerseits eine tatsächlich auf die Straße übertragene Bremskraft und andererseits die Spurstabilität des Kraftfahrzeugs 1 reduziert wird. Es ist bekannt, in solchen Fahrsituationen durch ein Fahrerassistenzsystem des Kraftfahrzeugs eine Momentanforderung an den Antriebsmotor 2 künstlich zu erhöhen, um ein starkes Schlupfen beziehungsweise Blockieren der Räder 5 zu vermeiden. Da dies jedoch zu relativ langen Regelstrecken führt, wird im Kraftfahrzeug 1 ein anderer Ansatz genutzt, um ein Blockieren beziehungsweise zu starkes Schlupfen der Räder 5 bei einer Rücknahme der Momentanforderung zu vermeiden beziehungsweise zu reduzieren.

Hierzu werden im laufenden Fahrbetrieb durch eine erste Steuereinrichtung 7, die beispielsweise in eine elektronische Stabilitätsregelung des Kraftfahrzeugs 1 implementiert, Fahrsituationsinformationen, die eine Haftreibung beziehungsweise einen Kraftschluss des Rades 5 sowie die Geschwindigkeit des Kraftfahrzeugs 1 beschreiben, erfasst. Hierbei kann insbesondere eine Kraftschluss-Schlupfkurve, die den Zusammenhang zwischen Schlupf und effektiven Haftwert beschreibt, in Abhängigkeit der aktuellen Fahrsituation ermittelt, angepasst oder ausgewählt werden. In Abhängigkeit dieser Größen kann, wie später noch genauer erläutert werden wird, eine Minimaldrehzahl für den Antriebsmotor 2 ermittelt werden, wobei ein Blockieren oder zu starkes Schlupfen der Räder 5 vermieden werden kann, wenn eine Unterschreitung dieser Minimaldrehzahl verhindert wird. Diese Minimaldrehzahl wird an eine zweite Steuereinrichtung 8, die Teil der Motorsteuerung des Antriebsmotors 2 ist, übertragen, wonach diese zweite Steuereinrichtung 8 die Drehzahl des Antriebsmotors 2 derart regelt, dass die Drehzahl des Antriebsmotors 2 stets größer als die Minimaldrehzahl ist. Hierzu kann beispielsweise die Drehzahl einer Abtriebswelle 10 über einen Drehzahlsensor 9 überwacht werden und durch eine entsprechende Momentvorgaben kann die Drehzahl des Antriebsmotors 2 auf einen oberhalb der Mindestdrehzahl liegenden Drehzahlwert geregelt werden.

Zur Ermittlung der Mindestdrehzahl kann eine Kraftschluss-Schlupfkurve für die aktuelle Fahrsituation genutzt werden. Fig. 2 zeigt Beispiele für Kraftschluss-Schlupfkurven 11, 12, 13, die in verschiedenen Fahrsituationen auftreten können. Nach rechts entlang der Achse 14 ist hierbei der Schlupf für das jeweilige Rad 5 aufgetragen und nach oben entlang der Achse 15 der tatsächlich realisierte Kraftschluss beziehungsweise der nutzbare Haftreibungswert. Die Kurven 11, 12, 13 unterscheiden sich bezüglich der Witterungsverhältnisse und des Fahrbahnuntergrundes. Die Kurve 11 beschreibt das Haftverhalten auf trockenem Asphalt, die Kurve 12 auf nassem Asphalt und die Kurve 13 auf losem Untergrund, beispielsweise Schotter.

Der Schlupf des Rades 5 hängt von der Raddrehzahl des Rades 5 sowie von der Geschwindigkeit des Kraftfahrzeugs ab. Beispielsweise kann in der Steuereinrichtung 7 der Umfang des Rades 5 gespeichert sein, so dass für eine bestimmte Raddrehzahl und eine bestimmte Geschwindigkeit jeweils der Schlupf berechnet werden kann. Ist der Schlupf kleiner als der Schlupf, für den das Maximum 16, 17, 18 der aktuell relevanten Kraftschluss-Schlupfkurve 11, 12, 13 erreicht wird, so kann das Fahrverhalten als stabil betrachtet werden, da eine weitere Erhöhung des Schlupfes zu einer weiteren Erhöhung des effektiven Haftwertes sowie der Bremskraft führt. Jenseits dieses Punkts resultiert ein instabiles Fahrverhalten, das vermieden werden soll.

Ist für eine aktuelle Fahrsituation somit die Kraftschluss-Schlupfkurve 11, 12, 13 bekannt, so wird für das Rad 5 ein Raddrehzahlminimum ermittelt, das eine Drehzahl des Rades 5 angibt, bei der der Schlupf des Rades 5 bei der aktuellen Geschwindigkeit des Kraftfahrzeugs 1 kleiner als jener Schlupf ist, bei dem ein maximaler Kraftschluss zwischen dem Rad 5 und dem Untergrund erreicht wird. Da die Räder 5 über das Getriebe 3 mit dem Antriebsmotor 2 gekoppelt sind, kann bei bekanntem Übersetzungsverhältnis des Getriebes 3 und des weiteren Antriebsstrangs aus diesem Raddrehzahlminimum unmittelbar die Minimaldrehzahl für den Antriebsmotor 2 berechnet werden, für die dieses Raddrehzahlminimum eingehalten wird.

Im Kraftfahrzeug 1 soll der Schlupf von zwei Rädern 5 der Hinterachse für eine Motor-Schleppmoment-Regelung überwacht werden. Bei einem Allradantrieb wären sogar vier Räder zu überwachen. Das beschriebene Vorgehen kann jeweils für das kritischste der angetriebenen Räder 5 durchgeführt werden, das heißt für jenes Rad, für das aktuell der stärkste Schlupf auftritt. Der Schlupf der Räder 5 kann ermittelt werden, indem über Drehzahlsensoren 19 die Raddrehzahlen der Räder 5 überwacht werden. In Abhängigkeit der aktuellen Geschwindigkeit kann ein Schlupf berechnet werden. Die Geschwindigkeit kann beispielsweise bestimmt werden, indem die Drehzahlen von nicht angetriebenen Rädern 20 durch weitere Drehzahlsensoren 21 überwacht werden. Ergänzend oder alternativ können Positionsdaten eines Navigationssystems 23 und/oder Videodaten einer Kamera 22 ausgewertet werden, um die aktuelle Fahrzeuggeschwindigkeit zu bestimmen.

Um die aktuell zutreffende Kraftschluss-Schlupfkurve 11, 12, 13 zu ermitteln, kann in der Steuereinrichtung 7 gespeichertes Vorwissen genutzt werden. Beispielsweise können dort bereits Kraftschluss-Schlupfkurven 11, 12, 13 für unterschiedliche Untergründe und/oder Witterungsverhältnisse abgelegt sein oder es kann eine Kraftschluss-Schlupfkurve vorgegeben sein, die durch einen oder mehrere im Rahmen des Fahrbetriebs ermittelte Parameter parametrisiert werden kann. Der Verlauf des Kraftschluss-Schlupfkurve hängt insbesondere von den aktuellen Witterungsverhältnissen sowie vom Untergrund ab. Informationen über die Witterungsverhältnisse können beispielsweise über die Kamera 22 erfasst werden oder über eine Kommunikationseinrichtung 24 drahtlos empfangen beziehungsweise von einem Server abgerufen werden. Zur Ermittlung des Fahrbahnuntergrundes können ebenfalls Videodaten der Kamera 22 ausgewertet werden und/oder es können Streckeninformationen aus dem Navigationssystem 23 ausgelesen werden, die den Untergrund beschreiben. Die in Abhängigkeit der genannten Informationen ermittelte Kraftschluss-Schlupfkurve 11, 12, 13 kann im laufenden Fahrbetrieb korrigiert beziehungsweise angepasst werden. Hierzu kann insbesondere überwacht werden, welche Momente auf die Räder 5 übertragen werden und welcher Schlupf hieraus jeweils resultiert.

Zusätzlich zu der erläuterten Steuerung beziehungsweise Regelung der Drehzahl des Antriebsmotors 2 derart, dass eine für die aktuelle Fahrsituation ermittelte Minimaldrehzahl nach Möglichkeit nicht unterschritten wird, soll der Antriebsmotor 2, solange diese Bedingung erfüllt ist, in Abhängigkeit einer Drehmomentvorgabe gesteuert werden. Hierzu gibt die Steuereinrichtung 7 über die Steuereinrichtung 8 ein Sollmoment für den Antriebsmotor 2 vor. Dieses Sollmoment kann insbesondere von einer über den Sensor 25 erfassten Stellung des Fahrpedals 6 abhängen. Dieses Sollmoment kann durch weitere Fahrzeugsysteme modifiziert werden, beispielsweise durch eine Leerlaufdrehzahlregelung, einen Abwürgschutz, eine elektronische Stabilitätskontrolle oder Ähnliches. Die Streueinrichtung 8 kann hierbei so eingerichtet sein, dass die Steuerung des Antriebsmotors in Abhängigkeit des Sollmoments erfolgt, wenn ein Drehzahlgrenzwert überschritten wird. Hierbei ist es möglich, dass zwischen der drehzahlbasierten Regelung beziehungsweise Steuerung und der drehmomentbasierten Regelung beziehungsweise Steuerung in Abhängigkeit einer aktuellen Drehzahl hart umgeschaltet wird. Vorzugsweise erfolgt jedoch eine Überblendung der Regel- beziehungsweise Steuermethoden .

## Patentansprüche

1. Verfahren zur Steuerung eines Antriebsmotors (2) in einem Kraftfahrzeug (1), umfassend die Schritte:
- Ermitteln einer Fahrsituationsinformation, die eine Haftreibung und/oder einen Kraftschluss wenigstens eines Rades (5) des Kraftfahrzeugs (1) und/oder eine Geschwindigkeit des Kraftfahrzeugs (1) beschreibt,
- Ermitteln einer Minimaldrehzahl des Antriebsmotors (2) in Abhängigkeit der Fahrsituationsinformation, und
- Regeln oder Steuern der Drehzahl des Antriebsmotors (2) in Abhängigkeit der Minimaldrehzahl, insbesondere derart, dass die Drehzahl stets größer ist als die Minimaldrehzahl,
wobei für das Rad (5) oder wenigstens eines der Räder (5) des Kraftfahrzeugs (1) ein von der Fahrsituationsinformation abhängiges Raddrehzahlminimum ermittelt wird, wobei die Minimaldrehzahl in Abhängigkeit des Raddrehzahlminimums ermittelt wird,
**dadurch gekennzeichnet,**
**dass** das Raddrehzahlminimum derart ermittelt wird, dass der Schlupf des oder des jeweiligen Rades (5) bei der Geschwindigkeit des Kraftfahrzeugs (1) kleiner ist als jener Schlupf, bei dem ein maximaler Kraftschluss zwischen dem Rad (5) und dem Untergrund erreicht wird.

2. Verfahren nach Anspruch 1,
**dadurch gekennzeichnet,**
**dass** der Antriebsmotor (2) in Abhängigkeit eines vorgegebenen Sollmoments gesteuert oder geregelt wird, wenn die Drehzahl die Minimaldrehzahl oder einen anderen Drehzahlgrenzwert, der größer als die Minimaldrehzahl ist, überschreitet.

3. Verfahren nach einem der vorangehenden Ansprüche,
**dadurch gekennzeichnet,**
**dass** ein jeweiliges Raddrehzahlminimum für mehrere Räder (5) des Kraftfahrzeugs (1) ermittelt wird, wobei die Minimaldrehzahl in Abhängigkeit des größten Raddrehzahlminimums ermittelt wird oder dass das Raddrehzahlminimum für das Rad (5) mit dem größten aktuellen Schlupf ermittelt und zur Berechnung der Minimaldrehzahl verwendet wird.

4. Kraftfahrzeug,
**dadurch gekennzeichnet,**
**dass** es zur Durchführung des Verfahrens nach einem der vorangehenden Ansprüche eingerichtet ist.

5. Kraftfahrzeug nach Anspruch 4,
**dadurch gekennzeichnet,**
**dass** es eine erste Steuereinrichtung (7) umfasst, die zur Ermittlung der Minimaldrehzahl des Antriebsmotors (2) und zur Übermittlung der Minimaldrehzahl an eine dem Antriebsmotor zugeordnete, zweite Steuereinrichtung (8) eingerichtet ist, wobei die zweite Steuereinrichtung (8) dazu eingerichtet ist, den Antriebsmotor (2) in Abhängigkeit der Minimaldrehzahl zu steuern oder zu regeln.

## Claims

1. Method for controlling a drive motor (2) in a motor vehicle (1), comprising the steps:
- determining driving situation information, which describes a static friction and/or a traction of at least one wheel (5) of the motor vehicle (1) and/or a speed of the motor vehicle (1),
- determining a minimum rotational speed of the drive motor (2) as a function of the driving situation information, and
- regulating or controlling the rotational speed of the drive motor (2) as a function of the minimum rotational speed, in particular in such a way that the rotational speed is always greater than the minimum rotational speed,
wherein a minimum wheel rotational speed that is dependent on the driving situation information is determined for the wheel (5) or at least one of the wheels (5) of the motor vehicle (1), the minimum rotational speed being determined as a function of the minimum wheel rotational speed,
**characterised in that**
the minimum wheel rotational speed is determined in such a way that the slip of the wheel or the respective wheel (5) at the speed of the motor vehicle (1) is less than the slip at which maximum traction is achieved between the wheel (5) and the ground.

2. Method according to claim 1,
**characterised in that**
the drive motor (2) is controlled or regulated as a function of a specified desired torque, if the rotational speed exceeds the minimum rotational speed or another rotational speed threshold that is greater than the minimum rotational speed.

3. Method according to any one of the preceding claims,
**characterised in that**
a respective minimum wheel rotational speed is determined for a plurality of wheels (5) of the motor vehicle (1), wherein the minimum rotational speed is determined as a function of the greatest minimum wheel rotational speed or **in that** the minimum wheel rotational speed for the wheel (5) with the greatest current slip is determined and is used for the calculation of the minimum rotational speed.

4. Motor vehicle,
**characterised in that**
it is adapted to carry out a method according to any one of the preceding claims.

5. Motor vehicle according to claim 4,
**characterised in that**
it comprises a first control apparatus (7), which is adapted to determine the minimum rotational speed of the drive motor (2) and to convey the minimum rotational speed to a second control apparatus (8) that is associated with the drive motor, wherein the second control apparatus (8) is adapted to control or regulate the drive motor (2) as a function of the minimum rotational speed.

## Revendications

1. Procédé de commande d'un moteur d'entraînement (2) dans un véhicule automobile (1), comprenant les étapes consistant à :
- déterminer une information de situation de conduite qui décrit un frottement statique et/ou une adhérence d'au moins une roue (5) du véhicule automobile (1) et/ou une vitesse du véhicule automobile (1),
- déterminer une vitesse de rotation minimale du moteur d'entraînement (2) en fonction de l'information de situation de conduite, et
- réguler ou commander la vitesse de rotation du moteur d'entraînement (2) en fonction de la vitesse de rotation minimale, en particulier de telle manière que la vitesse de rotation soit toujours supérieure à la vitesse de rotation minimale,
dans lequel un minimum de vitesse de rotation de roue dépendant de l'information de situation de conduite est déterminé pour la roue (5) ou pour au moins une des roues (5) du véhicule automobile (1), dans lequel la vitesse de rotation minimale est déterminée en fonction du minimum de vitesse de rotation de roue,
**caractérisé en ce que**,
le minimum de vitesse de rotation de roue est déterminé de telle manière que, à la vitesse du véhicule automobile (1), le patinage de la roue (5) respectif est inférieur au patinage pour lequel une adhérence maximale est obtenue entre la roue (5) et le sol.

2. Procédé selon la revendication 1,
**caractérisé en ce que**,
le moteur d'entraînement (2) est commandé ou régulé en fonction d'un couple souhaité prédéfini si la vitesse de rotation dépasse la vitesse de rotation minimale ou une autre valeur limite de vitesse de rotation qui est supérieure à la vitesse de rotation minimale.

3. Procédé selon l'une quelconque des revendications précédentes,
**caractérisé en ce que**,
un minimum respectif de vitesse de rotation de roue pour plusieurs roues (5) du véhicule automobile (1) est déterminé, dans lequel la vitesse de rotation minimale est déterminée en fonction du minimum de vitesse de rotation de roue le plus élevé, ou **en ce que** le minimum de vitesse de rotation de roue est déterminé pour la roue (5) présentant le patinage le plus important et est utilisé pour calculer la vitesse de rotation minimale.

4. Véhicule automobile,
**caractérisé en ce que**,
ledit véhicule automobile est conçu pour mettre en œuvre le procédé selon l'une quelconque des revendications précédentes.

5. Véhicule automobile selon la revendication 4,
**caractérisé en ce que**,
ledit véhicule automobile comprend un premier appareil de commande (7) conçu pour déterminer la vitesse de rotation minimale du moteur d'entraînement (2) et pour transmettre la vitesse de rotation minimale à un second appareil de commande (8) associé au moteur d'entraînement, dans lequel le second appareil de commande (8) est conçu pour commander ou pour réguler le moteur d'entraînement (2) en fonction de la vitesse de rotation minimale.
